# EUROPÄISCHE PATENTANMELDUNG

(11) **EP 2 573 212 A2**
(43) Veröffentlichungstag der Anmeldung: **27.03.2013**
(21) Anmeldenummer: 12185244.6
(22) Anmeldetag: 20.09.2012
(51) Int. Cl.: C25B 1/46, C25B 11/03, H01M 4/88, H01M 4/90

(54) **Sauerstoffverzehrelektrode und Verfahren zu ihrer Herstellung**

(30) Priorität: 23.09.2011 DE 102011083316
(71) Anmelder: Bayer Intellectual Property GmbH, 40789 Monheim (DE)
(72) Erfinder: Jörissen, Jakob, 44227 Dortmund (DE); Polcyn, Gregor, 44149 Dortmund (DE); Verfuß, Florian, 44137 Dortmund (DE); Toepell, Gabriel, 44227 Dortmund (DE)

(57) **Zusammenfassung**

Es wird ein Sauerstoffverzehrelektrode, insbesondere für den Einsatz in der Chloralkali-Elektrolyse, mit einer neuartigen Katalysatorbeschichtung sowie eine Elektrolysevorrichtung beschrieben. Es wird ferner ein Herstellungsverfahren für die Sauerstoffverzehrelektrode sowie ihre Verwendung in der Chloralkali-Elektrolyse oder Brennstoffzellentechnik beschrieben. Die Sauerstoffverzehrelektrode basiert auf einer Gasdiffusionsschicht als poröse Folie eines fluorierten Polymeren, in die als katalytisch aktive Komponente feine Kristallnadeln eines Katalysatormetalls eingebracht und mit dem Stromkollektor elektrisch leitend verbunden sind.

## Beschreibung

Die Erfindung betrifft eine Sauerstoffverzehrelektrode, insbesondere für den Einsatz in der Chloralkali-Elektrolyse, mit einer neuartigen Katalysatorbeschichtung auf Basis von Kristallnadeln eines Katalysatormetalls sowie eine Elektrolysevorrichtung. Die Erfindung betrifft ferner ein Herstellungsverfahren für die Sauerstoffverzehrelektrode sowie ihre Verwendung in der Chloralkali-Elektrolyse oder Brennstoffzellentechnik.

Die Erfindung geht aus von an sich bekannten Sauerstoffverzehrelektroden, die als Gasdiffusionselektroden ausgebildet sind und üblicherweise einen elektrisch leitenden Träger und eine Gasdiffusionsschicht mit einer katalytisch aktiven Komponente umfassen.

Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff-Entwickelnde Kathode der Elektrolyse (beispielsweise in der Chloralkali-Elektrolyse) durch die Sauerstoffverzehrelektrode (Kathode) zu ersetzen. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode - im folgenden auch kurz SVE genannt - muss eine Reihe von Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.% und gegenüber reinem Sauerstoff bei einer Temperatur von typischerweise 80 - 90°C. Ebenso wird ein hohes Maß an mechanischer Stabilität gefordert, so dass die Elektroden in Elektrolyseuren einer Größe von üblicherweise mehr als 2 m² Fläche (technische Größe) eingebaut und betrieben werden können. Weitere Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass Gas und Füssigkeitsraum voneinander getrennt bleiben. Die Langzeitstabilität und geringe Herstellkosten sind weitere besondere Anforderungen an eine technisch nutzbare Sauerstoffverzehrelektrode.

Eine weitere Entwicklungsrichtung zur Nutzung der SVE-Technologie in der Chlor-Alkali-Elektrolyse ist es, die Ionenaustauschermembran, die in der Elektrolysezelle den Anoden- vom Kathodenraum trennt, ohne Natronlaugespalt direkt auf die SVE aufzulegen. Diese Anordnung wird auch als zero gap Anordnung im Stand der Technik bezeichnet. Diese Anordnung wird üblicherweise auch in der Brennstoffzellen-Technologie angewandt. Nachteilig hierbei ist, dass die sich bildende Natronlauge durch die SVE zur Gasseite geleitet werden muss und anschließend an der SVE nach unten fließt. Hierbei darf es nicht zu einer Verstopfung der Poren in der SVE durch die Natronlauge oder zur Auskristallisation von Natronlauge in den Poren kommen. Es hat sich herausgestellt, dass hierbei auch sehr hohe Natronlauge-Konzentrationen entstehen können, wobei die Ionenaustauschermembran gegen diese hohen Konzentrationen nicht langzeitstabil ist (Lipp et al, J. Appl. Electrochem. 35 (2005)1015 - Los Alamos National Laboratory "Peroxide formation during chlor-alkali electrolysis with carbon-based ODC").

Nach Stand der Technik besitzen SVE eine Porenstruktur, in der durch den Einsatz eines fein verteilten hydrophoben Porensystems, meistens auf der Basis von PTFE (Polytetrafluorethylen, z.B. Teflon^{®}) alle Orte innerhalb der SVE für das auf der Kathodenseite eingesetzte Gas gut zugänglich sind. Andererseits muss auch der hydrophile, von einem Elektrolytfilm bedeckte Katalysator ausreichend fein verteilt sein, damit eine möglichst hohe Oberfläche für die elektrochemische Reaktion vorhanden ist, was zu niedrigen Zellspannungen führt. Bei den üblichen Fertigungsverfahren, Trocken- oder Nassverfahren, werden PTFE- und Katalysatorpartikel zur Herstellung der SVE eingesetzt. Die Mischung und Weiterverarbeitung dieser Partikel führt im Laufe des Fertigungsverfahren immer zu Bereichen, in denen größere, vom Elektrolyt geflutete Agglomerate von Katalysator-Partikeln - die keine Gasporen enthalten - vorkommen. Der Katalysator im Inneren solcher Agglomerate ist, da die Gasmoleküle nicht in ausreichender Menge zu diesem Katalysator diffundieren, nahezu unwirksam. Somit bleibt ein großer Teil des Katalysatormaterials ungenutzt.

Bidault et al. (2010, Journal of Power Sources, "A novel cathode for alkaline fuel cells based on a porous silver membrane", 195, pp. 2549-2556) haben eine Gasdiffusionskathode auf der Basis einer porösen Silbermembran entwickelt. Ziel hierbei war, eine hohe Oberfläche des Katalysators durch den Einsatz von feinporigem Silber zu erreichen. Hierbei zeigte sich, dass eine Beschichtung der Silberporen mit PTFE notwendig war, um ein vollständiges Fluten der Poren durch den Elektrolyten zu verhindern, da die Poren sonst nicht mehr für das Reaktionsgas zugänglich sind. Nachteil dieser Art der Gasdiffusionskathode ist, dass man die Poren der Silbermembran nicht beliebig klein wählen und damit die Oberfläche nicht stark erhöhen kann, da die PTFE-Beschichtung nicht mehr in die Poren eindringen kann. Weiterhin verringert eine zu starke Beschichtung der Poren wiederum die für die elektrokatalytische Reaktion verfügbare Silberoberfläche.

Die Aufgabe der vorliegenden Erfindung besteht darin, eine Sauerstoffverzehrelektrode, insbesondere für den Einsatz in der Chloralkali-Elektrolyse, bereitzustellen, die die vorstehenden Nachteile überwindet und somit für eine bessere Ausnutzung des Katalysators sorgt.

Gegenstand der Erfindung, mit der die gestellte Aufgabe gelöst wird, ist eine Sauerstoffverzehrelektrode, wenigstens umfassend einen Stromkollektor und eine e Gasdiffusionsschicht mit einer katalytisch aktiven Komponente, dadurch gekennzeichnet, dass die Gasdiffusionsschicht als poröse Folie eines fluorierten Polymeren, insbesondere als eine poröse Polytetrafluorethylen (PTFE)-Folie ausgebildet ist, in die als katalytisch aktive Komponente feine Katalysatorpartikel mit einem mittleren Durchmesser im Bereich von 0,05 µm bis 5 µm und einer mittleren Länge im Bereich von 10 µm bis 700 µm eines Katalysatormetalls eingebracht und mit dem Stromkollektor elektrisch leitend verbunden sind.

Bevorzugt beträgt das Länge zu Durchmesserverhältnis der Katalysatorpartikel mindestens 2 : 1, besonders bevorzugt mindestens 3 : 1. Bevorzugt weisen die Katalysatorpartikel einen mittleren Durchmesser im Bereich von 0,1 µm bis 5 µm und eine mittlere Länge im Bereich von 10 µm bis 700 µm auf.

Es wurde überraschenderweise gefunden, dass insbesondere durch den Einsatz einer porösen PTFE-Folie mit solchen feinen Katalysatorpartikeln eine große Katalysatoroberfläche erzeugt wird, die über die in der PTFE-Folie vorhanden Gasporen für das Gas gut erreichbar ist und über den Elektrolytfilm rund um die Katalysatorpartikel gut für das Wasser und damit die an der Reaktion beteiligten Ionen zugänglich ist.

Eine bevorzugte Sauerstoffverzehrelektrode ist dadurch gekennzeichnet, dass der Katalysator als katalytisch aktive Komponente Silber enthält.

Der Stromkollektor kann insbesondere in Form eines Netzes, Vlieses, Schaums, Gewebes, Geflechts, Gewirks, Streckmetall oder eines anderen durchlässigen flächigen Gebildes vorliegen. Bevorzugt ist der Stromkollektor ein flexibles textiles Gebilde insbesondere aus Metallfäden. Als Material für den Stromkollektor sind Nickel und mit Silber beschichtetes Nickel besonders geeignet.

In einer weiteren bevorzugten Variante der Sauerstoffverzehrelektrode beträgt die Dichte der Folie des fluorierten Polymeren 0,3 bis 1,8 g/cm³.

In einer weiteren bevorzugten Variante der Sauerstoffverzehrelektrode beträgt der Porendurchmesser der Folie des fluorierten Polymeren 0,1 bis 10 µm, der mittlere Porendurchmesser beträgt bevorzugt 0,2 bis 2 µm.

In einer anderen bevorzugten Variante der Sauerstoffverzehrelektrode beträgt die Porosität der Folie des fluorierten Polymeren von 40% bis 90%. Eine besonders bevorzugte Ausführung der neuen Sauerstoffverzehrelektrode ist dadurch gekennzeichnet, dass die Katalysatorpartikel aus Silber bestehen.

In einer weiteren besonders bevorzugte Variante der neuen Sauerstoffverzehrelektrode sind die Katalysatorpartikel beginnend auf dem Stromkollektor und nachfolgend in den Poren der Folie galvanisch abgeschieden.

Weiterer Gegenstand der Erfindung ist noch ein Verfahren zur Herstellung einer Sauerstoffverzehrelektrode, mit mindestens den Schritten:
A) Bereitstellen einer PTFE-Folie und eines Stromkollektors in Form eines durchlässigen, elektrisch leitenden, flächigen Gebildes, insbesondere eines metallischen Netzes, Vlieses, Schaums, Gewebes, Geflechts, Gewirks oder eines Streckmetalls, das in die Folie aus Schritt A) in eine Tiefe die mindestens bis zur Hälfte und höchstens bis zu 2/3 der Dicke der porösen Folie reicht, und gegebenenfalls Verbinden der Folie mit einem Stromkollektor durch Verpressen,
B) Tränken der Folie eines fluorierten Polymeren, insbesondere einer porösen PTFE-Folie mit einem leicht flüchtigen, organischen Lösungsmittel, bevorzugt einem C₁ - bis C₆ - Alkohol, besonders bevorzugt mit Isopropylalkohol, und anschließende wenigstens teilweise Verdrängung des Lösungsmittels durch Wasser oder eine wässrige Metallsalzlösung insbesondere auf Basis von mindestens einem Metallsalz aus der Reihe: Silbersalze, bevorzugt Silber-Nitrat, Silber-Methansulfonat, Kalium-Silber-Cyanid, Kalium-Silber-Thiosulfat, Silber-Lactat, oder Platinsalze, insbesondere Pt(NO₃)₂ oder H₂PtCl₆, oder Nickelsalze und Kupfersalze, insbesondere in einem Galvanikbad, auch gegebenenfalls in Anwesenheit von Zusätzen wie Glanzbildnern insbesondere Thioharnstoff, Saccharin,
C) gegebenenfalls nachträgliches Einpressen eines Stromkollektors in die Folie aus Schritt A) in eine Tiefe, die mindestens bis zur Hälfte und höchstens bis zu 2/3 der Dicke der porösen Folie reicht,
D) Galvanische Abscheidung der Katalysatorpartikel in Gegenwart von wässrigen Metallsalzlösungen insbesondere auf Basis von mindestens einem Metallsalz aus der Reihe: Silbersalze, bevorzugt Silber-Nitrat, Silber-Methansulfonat, Kalium-Silber-Cyanid, Kalium-Silber-Thiosulfat, Silber-Lactat, oder Platinsalze, insbesondere Pt(NO₃)₂ oder H₂PtCl₆, oder Nickelsalze und Kupfersalze, auch gegebenenfalls in Anwesenheit von Zusätzen wie Glanzbildnern insbesondere Thioharnstoff, Saccharin, durch einen Galvanikprozess, in dem der Stromkollektor als Kathode (3) dient und wobei die Katalysatorpartikel des Katalysatormetalls auf dem Stromkollektor aufwachsen.
E) Spülen der in D) entstandenen Sauerstoffverzehrelektrode mit Wasser und Alkohol und anschließendes Trocknen der Sauerstoffverzehrelektrode.

Bevorzugt ist ein neues Verfahren, das dadurch gekennzeichnet ist, dass der Stromkollektor bei der galvanischen Abscheidung D) direkt mit einer externen Stromquelle elektrisch kontaktiert ist, oder die Stromzuführung über eine Graphitplatte (1) und eine Graphitspray-Zwischenschicht (2) erfolgt, welche auf dem Stromkollektor aufliegt bzw. aufgebracht ist, welche nach der galvanischen Abscheidung D) wieder entfernt werden.

Die neue Sauerstoffverzehrelektrode wird bevorzugt als Kathode geschaltet, insbesondere in einer Elektrolysezelle für die Elektrolyse von Alkalichloriden, bevorzugt von Natriumchlorid oder Kaliumchlorid, besonders bevorzugt von Natriumchlorid.

Alternativ kann die Sauerstoffverzehrelektrode (SVE) bevorzugt als Kathode in einer Brennstoffzelle geschaltet werden. Bevorzugte Beispiele für solche Brennstoffzellen sind alkalische Brennstoffzellen.

Weiterer Gegenstand der Erfindung ist daher die Verwendung der neuen Sauerstoffverzehrelektrode zur Reduktion von Sauerstoff im Alkalischen, insbesondere in der alkalischen Brennstoffzelle, die Verwendung bei der Trinkwasseraufbereitung, beispielsweise zur Herstellung von Natriumhypochlorit oder die Verwendung in der Chlor-Alkalielektrolyse, insbesondere zur Elektrolyse von LiCl, KCl oder NaCl.

Die neue SVE wird besonders bevorzugt bei der Chlor-Alkali-Elektrolyse und hier insbesondere bei der Natriumchlorid-(NaCl)-Elektrolyse eingesetzt.

Das Verfahren wird beispielhaft wie folgt durchgeführt:

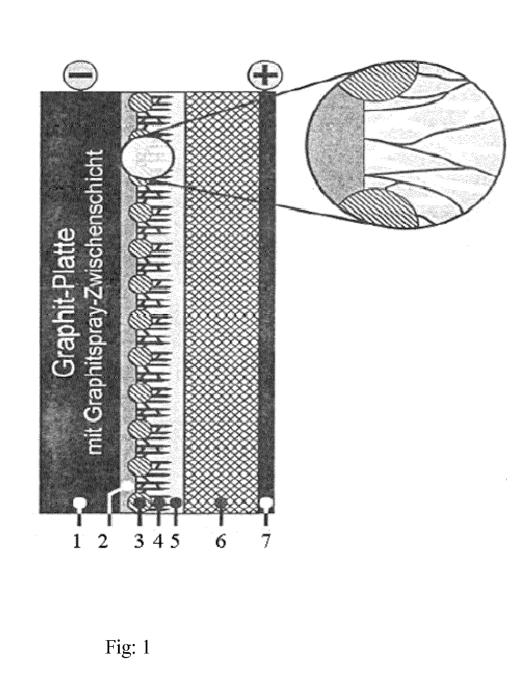

Im Schritt C), der galvanischen Abscheidung der Katalysatorpartikel in einem Galvanikprozess, dient das Stromkollektornetz als Kathode (3), siehe Figur 1, auf dem die Katalysatorpartikel des Katalysatormetalls aufwachsen und bei der die Minuspol Stromzuführung über angelötete Kabel direkt auf das Stromkollektornetz erfolgt, alternativ hierzu kann auch die Minuspol-Stromzuführung über eine Graphitplatte (1) und eine Graphitspray-Zwischenschicht (2) erfolgen, welche auf dem Stromkollektor aufliegt bzw. aufgebracht wird.

Die Graphitspray-Zwischenschicht kann z.B. nach der Herstellung abgewaschen werden. Als Opferanode bei der galvanischen Abscheidung dient insbesondere ein Blech aus dem Katalysatormetall (7) das als Pluspol der Stromzuführung geschaltet wird.

Mit Hilfe eines elastischen porösen Materials (6), z.B. Schaum aus Polyurethan, Gummi, Viskose oder Zellstoff, bevorzugt wird Zellstoff genommen, welches mit dem Galvanikbad getränkt ist, werden beispielsweise alle Teile der Anordnung für eine galvanische Abscheidung zusammengepresst. Aufgrund des elektrischen Feldes wachsen, sobald Strom durch die Anordnung fließt, die Katalysatorpartikel tendenziell senkrecht im Verhältnis zur SVE-Oberfläche gesehen.

Die Erfindung wird nachfolgend anhand der Figur 1 durch die Beispiele, welche jedoch keine Beschränkung der Erfindung darstellen, näher erläutert.

Figur 1 zeigt einen schematischen Querschnitt durch eine galvanotechnischen Zelle zur Herstellung der erfindungsgemäßen Sauerstoffverzehrelektrode (nicht maßstabsgerecht)

In der Figur haben die Bezugszeichen die nachstehende Bedeutung:
- 1: Graphit-Platte (Minuspol)
- 2: Graphitspray-Zwischenschicht
- 3: Stromkollektor
- 4: Katalysatorpartikel
- 5: poröses PTFE
- 6: elastisches, poröses Material
- 7: Metallblech (Pluspol)

### Beispiele

### Beispiel 1

Eine Scheibe eines 1,0 mm dicken Gore-Tex^{®} Dichtungsbandes DB 10-0-100 wurde zunächst mit Isopropylalkohol und anschließend mit entgastem Wasser getränkt. Eine Ronde mit einem Durchmesser von 41 mm wurde ausgestanzt. Waagerecht aufliegend auf einem feinen Nickelnetz wurde sie in eine Elektrolysezelle mit einer aktiven Fläche von etwa 10 cm² dicht eingebaut. In die Elektrolysezelle wurde 2-molare entgaste Silbernitratlösung eingefüllt und die Zelle einen Tag stehen gelassen, damit die Silbernitratlösung in die Poren der PTFE-Folie eindringen konnte. Mit einer Zwischenlage von etwa 2 mm Dicke aus Zellstoff, der mit Silbernitratlösung getränkt war, wurde eine Silberblech-Anode mit 36 mm Durchmesser mit einem Gewicht von 2,3 kg aufgepresst. Die Stromzuführung erfolgte mit unmittelbar an das Nickelnetz, als Minuspol, und das Silberblech, als Pluspol, angelöteten Kabeln.

Der galvanische Prozess wurde für 15 s mit einem Strom von 2 A gestartet. Danach flossen für 3,5 h 100 mA Strom bei einer Zellspannung unter 2 V. Nach dem Öffnen und Spülen der Elektrolysezelle zeigte sich, dass Katalysatorpartikel durch die poröse PTFE-Folie in den Zellstoff hinein gewachsen waren. Sie wurden bis zur Oberfläche der PTFE-Folie entfernt. Ein Stück der hergestellten SVE kam anschließend in einer dem Stand der Technik entsprechenden Halbzellen-Versuchsanordnung mit 3 cm² aktiver Fläche als Sauerstoff-Verzehrkathode in Natronlauge zum Einsatz. Sie erreichte dort im Betrieb mit reinem Sauerstoff eine Stromdichte von 50 A/m² zur Sauerstoffreduktion bei einem Potential von - 400 mV gegen die Normal-Wasserstoffelektrode. Dies zeigt, dass elektro-katalytisch aktive Silber-Katalysatorpartikel entstanden sind, die sowohl für den gasförmigen Sauerstoff als auch für die Natronlauge zugänglich sind.

### Beispiel 2 (Vergleichsbeispiel)

Zum Vergleich wurde in derselben Halbzellen-Versuchsanordnung unter gleichen Bedingungen ein nichtporöses Silberblech eingebaut und nur der Elektrolyt mit Sauerstoff gesättigt. Bei diesem Versuch lag die Stromdichte lediglich bei 1 A/m².

### Beispiel 3

Die Versuchsdurchführung erfolgte wie in Beispiel 1, jedoch wurde anstelle des PTFE Dichtungsbandes GoreTex DB 10-0-100 eine GoreTex Flachdichtung Typ GR und ein flachgewalztes feines Nickelnetz eingesetzt. Die entgaste Silbernitratlösung hatte hierbei eine Konzentration von 60 Gew.-% (ca. 7 molar). Die Katalysatorpartikel wurden mit einem Strom von 20 A bei etwa 10 V Zellspannung in 30 s abgeschieden. Mit der hergestellten Elektrode wurde beim Einsatz als Sauerstoff-Verzehrkathode bei einem Potenzial von - 600 mV gegen die Normal-Wasserstoffelektrode eine Stromdichte von 1400 A/m² erreicht. Der im Elektrodenpotenzial enthaltene geringe Ohm'sche Spannungsabfall von rund 17 mV je kAm⁻² (ermittelt durch galvanostatische Abschaltmessung) beweist den einwandfreien Kontakt der Katalysatorpartikel sowohl mit der elektrischen Stromzuführung als auch mit dem Elektrolyten Natronlauge.

## Patentansprüche

1. Sauerstoffverzehrelektrode, wenigstens umfassend einen Stromkollektor und eine Gasdiffusionsschicht mit einer katalytisch aktiven Komponente, **dadurch gekennzeichnet, dass** die Gasdiffusionsschicht als poröse Folie eines fluorierten Polymeren, insbesondere als eine poröse Polytetrafluorethylen (PTFE)-Folie ausgebildet ist, in die als katalytisch aktive Komponente feine Katalysatorpartikel mit einem mittleren Durchmesser im Bereich von 0,05 µm bis 5 µm und einer mittleren Länge im Bereich von 10 µm bis 700 µm eines Katalysatormetalls eingebracht und mit dem Stromkollektor elektrisch leitend verbunden sind.

2. Sauerstoffverzehrelektrode nach Anspruch 1, **dadurch gekennzeichnet, dass** der Katalysator als katalytisch aktive Komponente Silber umfasst.

3. Sauerstoffverzehrelektrode nach Anspruch 1 oder 2, **dadurch gekennzeichnet, dass** die Katalysatorpartikel einen mittleren Durchmesser im Bereich von 0,1 µm bis 5 µm und eine mittlere Länge im Bereich von 10 µm bis 700 µm aufweisen.

4. Sauerstoffverzehrelektrode nach einem der Ansprüche 1 bis 3, **dadurch gekennzeichnet, dass** der Stromkollektor in Form eines durchlässigen, elektrisch leitenden, flächigen Gebildes, insbesondere eines metallischen Netzes, Vlieses, Schaums, Gewebes, Geflechts, Gewirks oder eines Streckmetalls vorliegt.

5. Sauerstoffverzehrelektrode nach Anspruch 4, **dadurch gekennzeichnet, dass** der Stromkollektor als flexibles textiles Gebilde, das insbesondere aus Metallfäden aufgebaut ist, ausgebildet ist.

6. Sauerstoffverzehrelektrode nach einem der Ansprüche 1 bis 5, **dadurch gekennzeichnet, dass** als Material für den Stromkollektor Nickel oder mit Silber beschichtetes Nickel eingesetzt ist.

7. Sauerstoffverzehrelektrode nach einem der Ansprüche 1 bis 6, **dadurch gekennzeichnet, dass** die Porosität der Folie des fluorierten Polymeren von 40% bis 90% beträgt.

8. Sauerstoffverzehrelektrode nach einem der Ansprüche 1 bis 7, **dadurch gekennzeichnet, dass** die Poren der Folie des fluorierten Polymeren einen mittleren Durchmesser von 0,1 µm bis 10µm, bevorzugt 0,2 bis 2 µm aufweisen.

9. Sauerstoffverzehrelektrode nach einem der Ansprüche 1 bis 8, **dadurch gekennzeichnet, dass** die Dichte der Folie des fluorierten Polymeren 0,3 bis 1,8 g/cm³ beträgt.

10. Sauerstoffverzehrelektrode nach einem der Ansprüche 1 bis 9, **dadurch gekennzeichnet, dass** die Katalysatorpartikel aus Silber bestehen.

11. Sauerstoffverzehrelektrode nach einem der Ansprüche 1 bis 10, **dadurch gekennzeichnet, dass** die Katalysatorpartikel auf dem Stromkollektor und in den Poren der Folie galvanisch abgeschieden sind.

12. Verwendung der Sauerstoffverzehrelektrode nach einem der Ansprüche 1 bis 11 als Sauerstoff verzehrende Kathode in der Elektrolyse, insbesondere in der Chloralkalielektrolyse, oder als Elektrode in einer alkalischen Brennstoffzelle oder als Elektrode in einer Metall/Luft-Batterie.

13. Elektrolysevorrichtung, insbesondere für die Chloralkalielektrolyse, aufweisend eine Sauerstoffverzehrelektrode nach einem der Ansprüche 1 bis 11 als Sauerstoff verzehrende Kathode.

14. Verfahren zur Herstellung einer Sauerstoffverzehrelektrode nach einem der Ansprüche 1 bis 11, mit mindestens den Schritten:
A) Bereitstellen einer PTFE-Folie und eines Stromkollektors in Form eines durchlässigen, elektrisch leitenden, flächigen Gebildes, insbesondere eines metallischen Netzes, Vlieses, Schaums, Gewebes, Geflechts, Gewirks oder eines Streckmetalls, das in die Folie aus Schritt A) in eine Tiefe die mindestens bis zur Hälfte und höchstens bis zu 2/3 der Dicke der porösen Folie reicht, und gegebenenfalls Verbinden der Folie mit dem Stromkollektor durch Verpressen,
B) Tränken der Folie eines fluorierten Polymeren, insbesondere einer porösen PTFE-Folie mit einem leicht flüchtigen, organischen Lösungsmittel, bevorzugt einem C₁ - bis C₆ - Alkohol, besonders bevorzugt mit Isopropylalkohol, und anschließende wenigstens teilweise Verdrängung des Lösungsmittels durch Wasser oder eine wässrige Metallsalzlösung insbesondere auf Basis von mindestens einem Metallsalz aus der Reihe: Silbersalze, bevorzugt Silber-Nitrat, Silber-Methansulfonat, Kalium-Silber-Cyanid, Kalium-Silber-Thiosulfat, Silber-Lactat, oder Platinsalze, insbesondere Pt(NO₃)₂ oder H₂PtCl₆, oder Nickelsalze und Kupfersalze, insbesondere in einem Galvanikbad, auch gegebenenfalls in Anwesenheit von Zusätzen wie Glanzbildnern insbesondere Thioharnstoff, Saccharin,
C) Gegebenenfalls nachträgliches Einpressen des Stromkollektors in die Folie aus Schritt A) in eine Tiefe, die mindestens bis zur Hälfte und höchstens bis zu 2/3 der Dicke der porösen Folie reicht,
D) Galvanische Abscheidung der Katalysatorpartikel in Gegenwart von wässrigen Metallsalzlösungen insbesondere auf Basis von mindestens einem Metallsalz aus der Reihe: Silbersalze, bevorzugt Silber-Nitrat, Silber-Methansulfonat, Kalium-Silber-Cyanid, Kalium-Silber-Thiosulfat, Silber-Lactat, oder Platinsalze, insbesondere Pt(N0₃)₂ oder H₂PtCl₆, oder Nickelsalze und Kupfersalze, auch gegebenenfalls in Anwesenheit von Zusätzen wie Glanzbildnern insbesondere Thioharnstoff, Saccharin, durch einen Galvanikprozess, in dem der Stromkollektor als Kathode (3) dient und wobei die Katalysatorpartikel des Katalysatormetalls auf dem Stromkollektor aufwachsen.
E) Spülen der in D) entstandenen Sauerstoffverzehrelektrode mit Wasser und Alkohol und anschließendes Trocknen der Sauerstoffverzehrelektrode.

15. Verfahren nach Anspruch 14, **dadurch gekennzeichnet, dass** der Stromkollektor bei der galvanischen Abscheidung D) direkt kontaktiert ist, oder die Stromzuführung über eine Graphitplatte (1), auf welcher der Stromkollektor aufliegt, und eine Graphitspray-Zwischenschicht (2), welche auf der Graphitplatte (1) aufgebracht ist, erfolgt und dass die Graphitplatte (1) und die Graphitspray-Zwischenschicht (2) nach der galvanischen Abscheidung D) wieder entfernt werden.

16. Sauerstoffverzehrelektrode erhalten aus einem Verfahren gemäß einem der Ansprüche 14 bis 15.
